# EUROPÄISCHE PATENTSCHRIFT

(11) **EP 0 597 363 B1**
(45) Veröffentlichungstag und Bekanntmachung des Hinweises auf die Patenterteilung: **05.06.1996**
(21) Anmeldenummer: 93117751.3
(22) Anmeldetag: 02.11.1993
(51) Int. Cl.: B32B 27/32, B32B 27/34, B65D 65/40, B32B 1/08

(54) **Mehrschichtige coextrudierte, schrumpffähig verstreckte Schlauchfolie**
Multilayer co-extruded, shrinkable, stretched tubular
Feuille multicouche, coextrudée, étirée, rétractable en forme tubulaire

(30) Priorität: 12.11.1992 DE 4238127
(43) Veröffentlichungstag der Anmeldung: 18.05.1994
(73) Patentinhaber: WOLFF WALSRODE AKTIENGESELLSCHAFT, D-29699 Walsrode (DE)
(72) Erfinder: Hennig-Cardinal von Widdern, Michael, Dipl.-Ing., D-29664 Walsrode (DE); Krallmann, Anton, Dipl.-Ing., D-29683 Fallingbostel (DE); Reiners, Ulrich, Dr., D-29643 Neuenkirchen (DE)
(74) Vertreter: Braun, Rolf, Dr.

(56) Entgegenhaltungen:
- EP-A- 0 530 539
- DE-A- 2 747 305
- DE-A- 3 816 942
- US-A- 4 377 616
- US-A- 4 701 369

## Beschreibung

Die Erfindung betrifft eine mehrschichtig coextrudierte schrumpffähig verstreckte Schlauchfolie mit verbesserter Opazität für die Umhüllung von in flüssigem oder pastösem Zustand abgepackten Füllgütern, insbesondere Lebensmitteln, die während und/oder nach der Abfüllung eine Wärmebehandlung erfahren, wie z.B. Brüh- und Kochwurst, Käse, Butter und andere.

Einhergehend mit den Forderungen der Folienanwender nach Hüllen mit hoher Barrierewirkung gegenüber Wasserdampf- und Sauerstoffpermeation bei reduziertem Materialeinsatz, zeichnet sich in den vergangenen Jahren der Trend ab, Materialeigenschaften mittels der Coextrusion unterschiedlicher Polymere anforderungsgerecht zu kombinieren. Dabei setzen sich zunehmend Polyamid/Polyolefin-Verbunde mit Wandstärken zwischen 35 und 70 µm durch.

Coextrudierte biaxial verstreckte Polyamid / Polyolefinverbunde mit kleinen Durchmessern von 20 bis 150 mm werden nach dem heutigen Stand der Technik mit Wandstärken kleiner 65 µm hergestellt.

Dem Polyamid (PA) fällt bei derartigen Folienstrukturen bereits bei der biaxialen Verstreckung mittels der bekannten "double bubble"-Technik die Aufgabe zu, die Queraufweitung des Schlauches infolge Molekülorientierung und dehnungsinduzierter Kristallisation bei Querreckgraden um den Faktor 3 abzuschließen. Auch bei der zielgerechten Anwendung der Schlauchfolie z.B. als Wursthülle dominieren die Festigkeitseigenschaften des verstreckten Polyamides gegenüber denen der nicht vollständig ausgereckten Polyolefine.

Die Einfärbung derartiger Hüllen erfolgt durch Zumischen von Farbpigmenten in eine oder mehrere Schichten des Verbundes. Der Zugabe an Farbpigment in die einzelnen Schichten, insbesondere der PA-Schicht(en), sind hinsichtlich Mengenanteil und Pigmentkorngröße enge Grenzen gesetzt, da sonst die Pigmente die Polymermatrizen der einzelnen Schichten derart schwächen, daß einerseits der produktionsbestimmende Reckprozeß gestört wird, andererseits die für die spätere Anwendung wichtigen Festigkeits- und Barriereeigenschaften nicht erreicht werden können.

Die Mengenbegrenzung bei der Pigmentierung und die Zielrichtung, die Gesamtfolienstärke zu reduzieren, führen in der Vergangenheit häufig zu eingefärbten Hüllen mit geringer Opazität.

Demzufolge ist es Aufgabe dieser Erfindung, eine eingefärbte Hülle mit verbesserter Opazität zur Verfügung zu stellen.

Die japanische Anmeldung J 1 014 032 beschreibt eine biaxial verstreckte coextrudierte Schlauchfolie für die Anwendung als Brüh- und Kochwursthülle. Während die äußere, dem Füllgut abgewandte Polymerschicht aus aliphatischem Polyamid besteht, wird die innen liegende, dem Füllgut zugewandte Schicht, aus einem Ethylen-Acrylsäure-Copolymeren gebildet. Die zwischen der inneren und äußeren Lage angeordnete mittlere Schicht aus PE (Polyethylen)- bzw. PP (Polypropylen)-Copolymeren dient der Haftvermittlung der umgebenden Schichten. Dieses Folienkonzept bewährt sich in der praktischen Anwendung mit zufriedenstellenden Barriere- und Festigkeitseigenschaften.

Bei diesem Folientyp hat es sich in der Praxis durchgesetzt, daß nur die Polyolefinschicht(en) als Farbpigmentträger fungiert(en), da eine Schwächung der PA-Schicht durch Farbpigmente den Reckprozeß schwer kontrollierbar machen würde.

Aufgrund der geringen Polyolefinschichtstärke von ca. 15 bis 20 µm, die zur Verfügung steht, mit Farbpigmenten angereichert zu werden, gelingt es nicht, eine eingefärbte Hülle mit zufriedenstellender Opazität zu erzeugen.

Teilweise versucht man die unzureichende Deckkraft/Opazität der mit Farbpigmenten versehenen Polymerschicht(en) durch vollflächigen Farbdruck zu kaschieren. Dieser zusätzliche Konfektionierungsschritt ist jedoch aufwendig und steigert unnötig die Herstellungskosten.

Aufgabe der Erfindung war es demzufolge, dem Anwender eine mehrschichtig coextrudierte schrumpffähig verstreckte Schlauchfolie mit verbesserter Opazität für die Umhüllung von in flüssigem oder pastösem Zustand abgepackten Füllgütern, wie z.B. Brüh- oder Kochwurst, zur Verfügung zu stellen.

Die deutsche Anmeldung DE OS 36 31 231 beschreibt eine Folienrezeptur und ein Verfahren zur Herstellung einer opaken Polyolefin-Mehrschichtfolie für die Anwendung als synthetisches Geschenkpapier. Die Kernschicht dieser Folie besteht im wesentlichen aus einem Propylenpolymerem mit einem Zusatz eines anorganischen Pigments, wie z.B. Calciumcarbonat, Titandioxyd, Bariumsulfat oder Mischungen daraus. Diese Kernschicht ist beidseitig von polyolefinischen Siegelschichten umgeben, die ihrerseits ein Gleitmittel enthalten.

Die 3-schichtig coextrudierte Flachfolie wird vorzugsweise sequentiell biaxial verstreckt. Während die Längsverstreckung vorzugsweise bei PP-typischen Folientemperaturen von 120°C bis 140°C mit einem Reckfaktor 5 erfolgt, wird die anschließende Querverstreckung bei Folientemperaturen von vorzugsweise 160°C bis 175°C mit einem Reckfaktor 10 durchgeführt. Erst durch das Zusammenwirken der genannten Verfahrensbedingungen (Flächenreckgrad = 50, Folienrecktemperaturen zwischen 120°C und 175°C, sequentielle Verstreckung) wird um die anorganischen Pigmentkörner herum eine Vakuolenstruktur erzeugt, die zu perlmuttartigem Glanz führt.

Die europäische Anmeldung EP 0 435 626 beansprucht eine mindestens 2-schichtig coextrudierte opake Polypropylenfolie, in der die beiden Polypropylenschichten durch Zugabe von unterschiedlichen unverträglichen Additiven opak werden. Während in der einen Schicht die Opazität durch anorganischen Füllstoff (z.B. Kalziumcarbonat) erreicht wird, enthält die zweite Schicht organischen Füllstoff (z.B. Polybutylenterephthalat).

Anhand der erläuternden Beispiele wird auch bei dieser Anmeldung deutlich, daß die zur Opazität führenden Vakuolen nur durch sequentielle Verstreckung des Flachfilms bei hohem Flächenreckgrad (Faktor: 44) und hoher Temperatur (140 C bzw. 149 C) erhalten werden.

Gegenstand der nachfolgend beschriebenen Erfindung ist es, die Inhalte der DE-OS 36 31 231 und EP 0 435 626 auf einen mehrschichtig coextrudierten, biaxial verstreckten Folienschlauch, der neben Polyolefinschichten mindestens eine Polyamid-Schicht aufweist, anzuwenden.

Dem Fachmann erscheint diese Vorgehensweise zunächst unsinnig, da die biaxiale Verstreckung von Polyamid- und Polyolefinschichten enthaltenden Folienschläuchen nur unter Anwendung von den auf das Polyamid abgestimmten Verfahrensparametern gelingt und somit die Bildung von Vakuolen um die unverträglichen Füllstoffe herum ausgeschlossen erscheint:
1. Die erforderliche Recktemperatur des zu verstreckenden Schlauches (Primärschlauch) liegt in einem Temperaturbereich zwischen 80°C und 100°C. Demgegenüber betragen die empfohlenen Recktemperaturen der Polyolefinfolie in der DE OS 36 31 231 120°C bis 175°C.
2. Die Verstreckung des Primärschlauches erfolgt simultan, d.h. die Längs- und Querverstreckung laufen im wesentlichen gleichzeitig ab, während der polyolefinische Flachfilm bevorzugt sequentiell verstreckt wird. Das simultane Verstrecken des Primärschlauches schließt vollständig aus, daß die Längs- und Querverstreckung bei unterschiedlichen Temperaturen vorgenommen wird.
3. Die Verstreckung des mindestens eine PA-Schicht enthaltenden Primärschlauches ist mit Flächenreckgraden von ca. 10 abgeschlossen, demgegenüber werden beim polyolefinischen Flachfilm weitaus höhere Flächenreckgrade (ca. 50) angestrebt und erreicht. Gerade der hohe Flächenreckgrad des polyolefinischen Flachfilms führt nach dem Stand der Technik zu den Aufrissen innerhalb der unverträglichen Füllstoffe enthaltenden PP-Schicht, der die Opazität bewirkende Vakuolenstruktur.

Die deutsche Anmeldung DE-A-3 816 942 beschreibt eine mehrschichtig coextrudierte, schrumpfbare, biaxial verstreckte Schlauchfolie, umfassend eine Schicht aus Polyamid (z.B. Nylon 6, Nylon 6,6), und eine Schicht aus Polypropylen.

Gegenstand der Erfindung eine eine mehrschichtig coextrudierte, schrumpffähig bei Flächenreckgraden von 6 bis 14 biaxial verstreckte opake Schlauchfolie für die Umhüllung von in flüssigem oder pastösem Zustand abgepackten Füllgütern, insbesondere Lebensmitteln, die während und/oder nach der Abfüllung eine Wärmebehandlung erfahren, umfassend mindestens eine Schicht aus Polyamid und mindestens eine weitere Schicht aus einem Propylen-(Co-)Polymer, dadurch gekennzeichnet, daß mindestens eine aus Propylen-(Co-)Polymer bestehende Schicht mindestens einen mit der Propylen-basierenden Polymermatrix unverträglichen Füllstoff enthält, von dem während der biaxialen Verstreckung bei Flächenreckgraden zwischen 6 und 14 eine Vakuolenbildung ausgeht, die Opazität bewirkt.

Für den Fachmann überraschend konnte durch eine Vielzahl von Versuchen nachgewiesen werden, daß auch die Verstreckung von Polyamid/Polyolefinverbunden unter den oben genannten PA-typischen Randbedingungen zu einer Vakuolenbildung in der mit unverträglichen Füllstoffen versehenen Polypropylenschicht führt.

Die Hohlräume in der Polypropylenschicht resultieren aus der Zugabe von anorganischen bzw. organischen Füllstoffpartikeln in das Polyolefin und dessen simultaner biaxialer Verstreckung unter PA-typischen Verstreckbedingungen. Dabei kommt es entgegen der Erwartung auch bei den für das Polypropylen völlig untypischen Verstreckbedingungen initiiert durch die Unverträglichkeit des Füllstoffes mit dem polypropylenischen Matrixwerkstoff zu Ablösungserscheinungen zwischen Matrix und Füllstoff, die zu Hohlraumbildungen führen. Während das Erscheinungsbild der Vakuolen durchaus aus der DE OS 36 31 231 bekannt ist, so sind die Verfahrensparameter und die Verstreckbedingungen, die dazu führen, stark abweichend vom bekannten Stand der Technik.

In einer bevorzugten Ausführungsform werden für die PA-Schicht aliphatische Polyamide verwendet. In einer besonders bevorzugten Ausführungsform werden als Polyamide Polyamid 6 oder Copolyamide mit einem überwiegenden Anteil an Caprolactam eingesetzt. Diese Polyamide können allein oder als Polymermischung untereinander oder als Polymermischung mit anderen Polymeren, wie z.B. aromatischen Polyamiden, Polyethylen oder Ethylen-basieren Copolyymeren, Polypropylen oder Propylen basierenden Copolymeren, Polyester, u.s.w. mit überwiegendem aliphatischem PA-Anteil verarbeitet werden. Aus der Definition der Polyamide resultieren mögliche Flächenreckgrade (Quer- * Längsreckgrad) zwischen 6 und 14, insbesondere 8 und 10. Die PA-Schicht besitzt vorzugsweise eine Stärke von 10 bis 30 ym. In einer besonders bevorzugten Ausführung eine Stärke zwischen 15 bis 25 ym.

Die Polypropylenschicht/(en) besteht/(en) vorzugsweise aus homopolymerem Polypropylen und/oder Propylen-basierenden Copolymeren und verfügt vorzugsweise über Schichtstärken zwischen 5 und 25 µm, in einer besonders bevorzugten Ausführung zwischen 10 und 20 µm.

Der anorganische Füllstoff besitzt eine mittlere Korngröße von 0,5 bis 5 µm, bevorzugt 2 bis 4 ym und besteht aus Calciumcarbonat, Titandioxyd oder anderen mit dem Polyolefin unverträglichen Pigmenten entsprechender mittlerer Korngröße.

Alternativ und/oder zusätzlich zum anorganischen Füllstoff können der Polyolefinmatrix auch organische Füllstoffe wie z.B. Polyamid, Polyethylenterephthalat, Polybutylenterephthalat, Polycarbonat, Polyacrylnitril oder Copolymere der vorgenannten Stoffe und/oder Mischungen aus denselben zugegeben werden.

Die im nachfolgenden aufgeführten Beispiele wurden an einer 5-Schicht-Schlauchcoextrusionslinie realisiert. Das Plastifizieren und Homogenisieren der thermoplastischen Polymere erfolgte mit 5 separaten Extrudern.

Folienverbunde mit weniger als 5 wechselnden Polymerschichten wurden hergestellt, indem 2 oder mehr identische Schichten übereinandergelegt worden sind.

### Beispiel 1: [PA6 / HV / PP+CaCO3]

Aus der Coextrusionsdüse tritt ein 3-schichtig coextrudierter Primärschlauch mit dem Aufbau A1.1 /B1.1 / C1.1 aus und wird sowohl von außen als auch von innen mit auf 10°C temperiertem Wasser abgekühlt. Der schmelzeflüssige Primärschlauch wird mittels eines dicht abschließenden Walzenpaares aus der Düse abgezogen, wobei die innere Kühlwassersäule abgequetscht wird.

Polymer A1.1 ist ein Polyamid 6 (Durethan B 38 FKS) und liegt auf der Innenseite des Schlauches.
Polymer C1.1 ist ein isotaktisches Polypropylen (Moplen T30 S von Himont) und liegt auf der äußeren, der dem Füllgut abgewandten Seite des Schlauches. Das PP enthält 15 Gew.-% Kalziumcarbonat mit einer mittleren Korngröße von 4 µm.
Polymer B1.1 hat die Funktion der Haftvermittlung zwischen PA- und PP-Schicht und besteht aus einem Propylen-basierenden Copolymer mit aufgepfropften Maleinsäureanhydridgruppen (Admer QF 551 E von Mitsui.)

Der so erhaltene dickwandige Primärschlauch ist transparent und hat einen Durchmesser von 20 mm.
Anschließend wird der Primärschlauch in einem auf 95°C temperierten Luftstrom wiedererwärmt und durch Einschluß einer Druckluftblase zwischen zwei luftdicht abschließenden Walzenpaaren um das 3,1-fache sowohl in Quer- als auch in Längsrichtung verstreckt. Während der biaxialen Verstreckung erhält der Sekundärschlauch ein weißes, stark opakes Aussehen.

Wiederum zwischen zwei gasdicht abschließenden Walzenpaaren durchläuft der biaxial gereckte Folienschlauch für 20 Sekunden eine auf 165°C temperierte Wärmebehandlungszone (unvollständige Thermofixierung), wobei ein innen eingebrachtes Druckluftpolster weitgehend eine Durchmesserreduzierung infolge von Schrumpfen verhindert. Die so erhaltene Schlauchfolie besitzt eine Gesamtfolienstärke von 39 µm, einen Durchmesser von 60 mm und weist eine hohe Opazität auf.

Im Rahmen einer anwendungstechnischen Prüfung wird die Schlauchfolie mit sehr grober Leberwurstmasse gefüllt und nach üblichem Procedere weiterverarbeitet.

An der fertiggestellten, mit der weiß erscheinenden Folie umhüllten Wurst, ist aufgrund der starken Opazität die grobe Struktur des Füllgutes nicht sichtbar.

### Beispiel 2: [PA6 / HV / PP + PBT]

Nach gleichem Verfahren, wie in Beispiel 1 beschrieben, wird ein 3-schichtig coextrudierter Primärschlauch mit dem Aufbau (von innen nach außen) A1.1 / B1.1 / C1.3 hergestellt und anschließend biaxial verstreckt und thermofixiert.

Die Polymere A1.1 und B1.1 sind bereits in Beispiel 1 definiert worden.

Polymer C1.3 ist wiederum ein isotaktisches Polypropylen (Moplen T 30 S), mit dem Unterschied zu Beispiel 1, daß als unverträgliches Additiv 8 Gew.-% Polybutylenterephthalat (Pocan B 1800) zugemischt worden ist.

Das Fertigprodukt besitzt eine Gesamtfolienstärke von 39 µm. Der nachfolgende anwendungstechnische Test zeigt im Vergleich zum Folienmuster aus Beispiel 1 hinsichtlich Opazität gleich gute Ergebnisse.

### Beispiel 3: [PA6 / HV / P-Copo.+CaCO3 / P-Copo.+Farbpigment (FP)]

Nach gleichem Verfahren, wie in Beispiel 1 beschrieben, wird ein 4-schichtig coextrudierter Primärschlauch mit dem Aufbau (von innen nach außen) A1.1 / B1.1 / C2.1 / C2.2 hergestellt und anschließend biaxial verstreckt und thermofixiert.

Die Polymere A1.1 und B1.1 sind bereits in Beispiel 1 definiert worden.

Polymer C2.1 ist ein Propylen-basierendes Copolymer mit Ethylen-Anteilen (Eltex PKL 415 von Solvay) und enthält wiederum 15 Gew.-% Kalziumcarbonat mit einer mittleren Korngröße von 4 µm.

Polymer C2.2 besteht aus dem gleichen Basispolymer wie C2.1 mit dem Unterschied, daß in diese Schicht über ein Masterbatch goldfarbige Pigmente eingebracht worden sind.

Das Fertigprodukt besitzt eine Gesamtfolienstärke von 45 µm. Die nachfolgende anwendungstechnische Prüfung mit grober Leberwurstmasse macht deutlich, daß die Farbwirkung der Gold-Pigmente infolge hoher Opazität trotz der unregelmäßigen Oberfläche des Füllgutes sehr gleichmäßig erscheint.

### Beispiel 4: [PA6.66 / HV / PP+CaCO3 / HV / PA6.66]

Die in Beispiel 4 beschriebene Folie weist die symmetrische Struktur A2.1 / B1.1 / C1.1 / B1.1 / A2.1 auf.

Die Polymere B1.1 und C1.1 sind bereits in Beispiel 1 näher erläutert worden.

A2.1 besteht aus einem Copolyamid basierend auf Caprolactam mit Anteilen aus Adipinsäure und Hexamethylendiamin (Ultramid C35 Q von BASF).

Die Verstreckung des Folienschlauches erfolgt bei geringfügig höherem Flächenreckgrad (3,2 * 3,2). Das Fertigprodukt weist eine Gesamtfolienstärke von 50 µm auf. Bei gleichbleibend hoher Opazität bewirkt das außen liegende PA 6.66 einen hohen Oberflächenglanz aufweiß erscheinendem Untergrund.

Der nachfolgende anwendungstechnische Test führt zu gleich guten Ergebnissen wie bei vorstehenden Beispielen.

### Beispiel 5: [PA6.66 / HV / P-Copo.+CaCO3 / HV+FP / PA6.66]

Die Folie aus Beispiel 5 ist durch die Schichtenfolge A2.1 / B1.1 / C2.1 / B1.2 / A2.1 gekennzeichnet.

Bis auf das Polymer B1.2 sind alle Polymere in den vorangegangenen Beispielen erläutert.

Polymer B1.2 besteht aus dem gleichen Basispolymer wie B1.1 mit dem Unterschied, daß in diese Schicht über ein Masterbatch goldfarbige Pigmente eingebracht worden sind.

Die Verstreckung des Folienschlauches erfolgt bei einem Flächenreckgrad von 10,2 (3,2 * 3,2). Das Fertigprodukt weist eine Gesamtfolienstärke von 50 µm auf. Bei gleichbleibend hoher Opazität bewirkt das außen liegende PA6.66 einen hohen Oberflächenglanz auf goldfarbig erscheinendem Untergrund.

Der nachfolgende anwendungstechnische Test führt zu gleich guten Ergebnissen wie bei vorstehenden Beispielen.

### Beispiel 6: [PA6.66 / HV+CaCO3 / P-Copo.+FP / HV / PA6.66]

Die Folie aus Beispiel 6 ist durch die Schichtenfolge A2.1 / B1.3 / C2.2 / B1.1 / A2.1 gekennzeichnet.

Bis auf das Polymer B1.3 sind alle Polymere in den vorangegangenen Beispielen erläutert.

Polymer B1.3 besteht aus dem gleichen Basispolymer wie B1.1 mit dem Unterschied, daß in diese Schicht 15 Gew.-% Kalziumcarbonat mit einer mittleren Korngröße von 4 ym eingebracht worden sind.

Die Verstreckung des Folienschlauches erfolgt bei einem Flächenreckgrad von 10,2 (3,2 * 3,2). Das Fertigprodukt weist eine Gesamtfolienstärke von 50 ym auf. Bei gleichbleibend hoher Opazität bewirkt das außen liegende PA6.66 einen hohen Oberflächenglanz auf goldfarbig erscheinendem Untergrund.

Der nachfolgende anwendungstechnische Test führt zu gleich guten Ergebnissen wie bei vorstehenden Beispielen.

## Patentansprüche

1. Mehrschichtig coextrudierte, schrumpffähige bei Flächenreckgraden von 6 bis 14 biaxial verstreckte opake Schlauchfolie für die Umhüllung von in flüssigem oder pastösem Zustand abgepackten Füllgütern, insbesondere Lebensmitteln, die während und/oder nach der Abfüllung eine Wärmebehandlung erfahren, umfassend mindestens eine Schicht aus Polyamid und mindestens eine weitere Schicht aus einem Propylen-(Co-)Polymer, dadurch gekennzeichnet, daß mindestens eine aus Propylen-(Co-)Polymer bestehende Schicht mindestens einen mit der Propylen-basierenden Polymermatrix unverträglichen Füllstoff enthält, von dem während der biaxialen Verstreckung bei Flächenreckgraden zwischen 6 und 14 eine Vakuolenbildung ausgeht, die Opazität bewirkt.

2. Schlauchfolie nach Anspruch 1, dadurch gekennzeichnet, daß die Propylenbasierende opake Polymerschicht aus Polypropylen, Propylen-basierenden Copolymerem und/oder Mischungen aus denselben besteht.

3. Schlauchfolie nach den Ansprüchen 1 oder 2, dadurch gekennzeichnet, daß die Propylen-basierende opake Polymerschicht anorganisches Additiv als mit der Polymermatrix unverträglichen Füllstoff mit einem Anteil von 2 bis 20, insbesondere 5 bis 15 Gew.-%, enthält.

4. Schlauchfolie nach einem der Ansprüche 1 bis 3, dadurch gekennzeichnet, daß das anorganische Additiv Kalziumcarbonat, Aluminiumoxid, Siliciumdioxid oder Titandioxid oder eine Mischung aus denselben ist.

5. Schlauchfolie nach einem der Ansprüche 1 bis 4, dadurch gekennzeichnet, daß das anorganische Additiv eine mittlere Korngröße von 0,5 bis 8 µm, insbesondere 2 bis 4 µm, aufweist.

6. Schlauchfolie nach den Ansprüchen 1 oder 2, dadurch gekennzeichnet, daß die Propylen-basierende opake Polymerschicht organisches Additiv als mit der Polymermatrix unvertraglichen Füllstoff mit einem Anteil von 5 bis 25 Gew.-%, insbesondere 10 bis 20 Gew.-%, enthält.

7. Schlauchfolie nach den Ansprüchen 1, 2 oder 6, dadurch gekennzeichnet, daß das organische Additiv aus thermoplatisch verarbeitbarem Polyamid, Polyethylenterephthalat, Polybutylenterephthalat, Polycarbonat, Polyacrylnitril, Polyvinylacetat, aus Copolymeren der vorgenannten Stoffe und/oder einer Mischung aus denselben besteht.

8. Schlauchfolie nach wenigstens einem der vorangegangenen Ansprüche, dadurch gekennzeichnet, daß die Propylen-basierende opake Polymerschicht organische und anorganische Additive als mit der Polymermatrix unverträgliche Füllstoffe enthält.

9. Schlauchfolie nach wenigstens einem der vorangegangenen Ansprüche, dadurch gekennzeichnet, daß neben der unverträglichen Füllstoff enthaltenden Propylenbasierenden opaken Polymerschicht, mindestens eine weitere Polymerschicht Farbpigmente enthält.

10. Schlauchfolie nach wenigstens einem der vorangegangenen Ansprüche, dadurch gekennzeichnet, daß mindestens eine Polyamid-Schicht aus aliphatischem Polyamid PA 6, PA 11, PA 12, PA 66, PA 6.66, PA 6.8, PA 6.9, PA 6.10, PA 6.11, PA 6.12, einem Copolymer aus den darin enthaltenen Monomereinheiten oder einer Mischung der genannten Polyamide, besteht.

11. Schlauchfolie nach wenigstens einem der vorangegangenen Ansprüche, dadurch gekennzeichnet, daß mindestens eine Polyamid-Schicht 70 bis 95 Gew.-% eines aliphatischen Polyamids und/oder Copolyamids und/oder Mischungen aus denselben und wenigstens ein
- (teil-)aromatisches Polyamid und/oder
- olefinisches (Co-)Polymer (EVA; EVOH; Ionomerharz, säuremodifizierte Olefin-(Co-)Polymere)
- (Co-)Polyester
in Mengen von mindestens 5 bis höchstens 30 Gew.-%, bezogen auf das Gesamtgewicht des Polymergemisches, enthalten.

12. Schlauchfolie nach wenigstens einem der vorangegangenen Ansprüche, dadurch gekennzeichnet, daß zwischen den Polyamid- und Polyolefinschichten haftvermittelnde Schichten eingefügt sind und die haftvermittelnden Schichten aus Propylen- und/oder Ethylen-Copolymeren, die säuremodifiziert sind, bestehen.

## Claims

1. Multilayer, coextruded, shrinkable, biaxially oriented tubular film which is opaque at areal stretch factors of 6 to 14 for covering fillings which are packaged in the liquid or pasty state, in particular foodstuffs, which are subjected to heat treatment during and/or after filling, comprising at least one layer of polyamide and at least one further layer of a propylene (co)polymer, characterised in that at least one layer consisting of a propylene (co)polymer contains at least one filler which is incompatible with the propylene based polymer matrix and which gives rise during biaxial stretching at areal stretch factors of between 6 and 14 to vacuole formation, which brings about opacity.

2. Tubular film according to claim 1, characterised in that the propylene based opaque polymer layer consists of polypropylene, a propylene based copolymer and/or mixtures thereof.

3. Tubular film according to claims 1 or 2, characterised in that the propylene based opaque polymer layer contains from 2 to 20, in particular from 5 to 15 wt.% of inorganic additive as the filler incompatible with the polymer matrix.

4. Tubular film according to one of claims 1 to 3, characterised in that the inorganic additive is calcium carbonate, aluminium oxide, silicon dioxide or titanium dioxide or a mixture thereof.

5. Tubular film according to one of claims 1 to 4, characterised in that the inorganic additive has an average grain size of 0.5 to 8 µm, in particular of 2 to 4 µm.

6. Tubular film according to claims 1 or 2, characterised in that the propylene based opaque polymer layer contains from 5 to 25 wt.%, in particular from 10 to 20 wt.% of organic additive as the filler incompatible with the polymer matrix.

7. Tubular film according to claims 1, 2 or 6, characterised in that the organic additive consists of thermoplastic polyamide, polyethylene terephthalate, polybutylene terephthalate, polycarbonate, polyacrylonitrile, polyvinyl acetate, of copolymers of the above-stated substances and/or a mixture thereof.

8. Tubular film according to at least one of the preceding claims, characterised in that the propylene based opaque polymer layer contains organic and inorganic additives as the fillers incompatible with the polymer matrix.

9. Tubular film according to at least one of the preceding claims, characterised in that, in addition to the propylene based, opaque polymer layer containing incompatible filler, at least one further polymer layer contains colouring pigments.

10. Tubular film according to at least one of the preceding claims, characterised in that at least polyamide layer consists of aliphatic polyamide PA 6, PA 11, PA 12, PA 66, PA 6,66, PA 6,8, PA 6,9, PA 6,10, PA 6,11, PA 6,12, a copolymer of the monomer units contained therein or a mixture of the stated polyamides.

11. Tubular film according to at least one of the preceding claims, characterised in that at least one polyamide layer contains from 70 to 95 wt.% of an aliphatic polyamide and/or copolyamide and/or mixtures thereof and at least one
- (partially) aromatic polyamide and/or
- olefinic (co)polymer (EVA; EVOH; ionomer resin, acid-modified olefin (co)polymers)
- (co)polyester
in quantities of at least 5 to at most 30 wt.%, relative to the total weight of the polymer mixture.

12. Tubular film according to at least one of the preceding claims, characterised in that coupling layers are interposed between the polyamide and polyolefin layers and the coupling layers consist of copolymers of propylene and/or ethylene which are acid modified.

## Revendications

1. Feuille en gaine opaque apte au retrait, ayant subi un étirage biaxial à des degrés d'étirage superficiel de 6 à 14, coextrudée pour obtenir une structure multicouche, destinée à envelopper des produits de remplissage emballés à l'état liquide ou pâteux, en particulier des aliments qui sont soumis à un traitement thermique pendant et/ou après le transvasement, comprenant au moins une couche de polyamide et au moins une couche supplémentaire d'un (co)polymère de propylène, caractérisée en ce qu'au moins une couche constituée par un (co)polymère de propylène contient au moins une substance de remplissage incompatible avec la matrice polymère à base de propylène, à partir de laquelle se déclenche une formation de vacuoles au cours de l'étirage biaxial à des degrés d'étirage superficiel entre 6 et 14, qui procure l'opacité.

2. Feuille en gaine selon la revendication 1, caractérisée en ce que la couche polymère opaque à base de propylène est constituée par du polypropylène, par des copolymères à base de propylène et/ou par des mélanges de ces derniers.

3. Feuille en gaine selon la revendication 1 ou 2, caractérisée en ce que la couche polymère opaque à base de propylène contient un additif inorganique comme substance de remplissage incompatible avec la matrice polymère, en une fraction de 2 à 20, en particulier de 5 à 15% en poids.

4. Feuille en gaine selon l'une quelconque des revendications 1 à 3, caractérisée en ce que l'additif inorganique est du carbonate de calcium, de l'oxyde d'aluminium, du dioxyde de silicium ou du dioxyde de titane ou encore un mélange de ces derniers.

5. Feuille en gaine selon l'une quelconque des revendications 1 à 4, caractérisée en ce que l'additif inorganique présente une granulométrie moyenne de 0,5 à 8 µm, en particulier de 2 à 4 µm.

6. Feuille en gaine selon la revendication 1 ou 2, caractérisée en ce que la feuille polymère opaque à base de propylène contient un additif organique comme substance de remplissage incompatible avec la matrice polymère, en une fraction de 5 à 25% en poids, en particulier de 10 à 20% en poids.

7. Feuille en gaine selon la revendication 1, 2 ou 6, caractérisée en ce que l'additif organique est constitué par un polyamide qui peut être traité pour obtenir une matière thermoplastique, par du polyéthylène-téréphtalate, par du polybutylène-téréphtalate, par du polycarbonate, par du polyacrylonitrile, par de l'acétate de polyvinyle, par des copolymères des substances susmentionnées et/ou par un mélange de ces dernières.

8. Feuille en gaine selon au moins une des revendications précédentes, caractérisée en ce que la couche polymère opaque à base de propylène contient des additifs organiques et inorganiques comme substances de remplissage incompatibles avec la matrice polymère.

9. Feuille en gaine selon au moins une des revendications précédentes, caractérisée en ce que, outre la couche polymère opaque à base de propylène contenant la substance de remplissage incompatible, au moins une couche polymère supplémentaire contient des pigments colorés.

10. Feuille en gaine selon au moins une des revendications précédentes, caractérisée en ce qu'au moins une couche de polyamide est constituée par un polyamide aliphatique PA 6, PA 11, PA 12, PA 66, PA 6.66, PA 6.8, PA 6.9, PA 6.10, PA 6.11, PA 6.12, par un copolymère des unités monomères qui y sont contenues ou par un mélange des polyamides mentionnés.

11. Feuille en gaine selon au moins une quelconque des revendications précédentes, caractérisée en ce qu'au moins une couche de polyamide contient de 70 à 95% en poids d'un polyamide et/ou d'un copolyamide aliphatique et/ou de mélanges de ces derniers, et au moins
- un polyamide (partiellement) aromatique et/ou
- un (co)polymère oléfinique (EVA; EVOH; une résine ionomère, des (co)polymères oléfiniques modifiés par un acide)
- un (co)polyester,
dans des quantités d'au moins 5 à maximum 30% en poids, rapportées au poids total du mélange polymère.

12. Feuille en gaine selon au moins une quelconque des revendications précédentes, caractérisée en ce que des couches adhésives sont insérées entre les couches de polyamide et de polyoléfine, et les couches adhésives sont constituées par des copolymères de propylène et/ou d'éthylène qui ont été modifiés par un acide.
